# EUROPÄISCHE PATENTSCHRIFT

(11) **EP 1 210 250 B1**
(45) Veröffentlichungstag und Bekanntmachung des Hinweises auf die Patenterteilung: **19.05.2004**
(21) Anmeldenummer: 00963969.1
(22) Anmeldetag: 06.09.2000
(51) Int. Cl.: B60R 21/01

(54) **VERFAHREN UND VORRICHTUNG ZUM STEUERN DES BETRIEBS EINER EINEM SITZ ZUGEORDNETEN INSASSENSCHUTZVORRICHTUNG, INSBESONDERE IN EINEM KRAFTFAHRZEUG**
METHOD AND DEVICE FOR CONTROLLING THE OPERATION OF AN OCCUPANT-PROTECTION DEVICE ALLOCATED TO A SEAT, IN PARTICULAR, IN A MOTOR VEHICLE
PROCEDE ET DISPOSITIF POUR COMMANDER LE FONCTIONNEMENT D'UN DISPOSITIF DE PROTECTION D'OCCUPANTS ASSOCIE A UN SIEGE, NOTAMMENT DANS UN VEHICULE AUTOMOBILE

(30) Priorität: 10.09.1999 DE 19943384
(43) Veröffentlichungstag der Anmeldung: 05.06.2002
(73) Patentinhaber: SIEMENS AKTIENGESELLSCHAFT, 80333 München (DE)
(72) Erfinder: KÖHLER, Thorsten, 93049 Regensburg (DE); ERTL, Ludwig, 85049 Ingolstadt (DE); ZITTLAU, Dirk, 92348 Stöckelsberg (DE)
(86) Internationale Anmeldenummer: PCT/DE2000/003083
(87) Internationale Veröffentlichungsnummer: WO 2001/019648

(56) Entgegenhaltungen:
- EP-A- 0 885 782
- DE-A- 19 757 595
- R L PHEN ET AL: "Advanced Air Bag Technology Assessment - Final Report" OCCUPANT PROTECTION, April 1998 (1998-04), XP002137509

## Beschreibung

Die Erfindung betrifft ein Verfahren und eine Vorrichtung zum Steuern des Betriebs einer einem Sitz zugeordneten Insassenschutzvorrichtung, insbesondere in einem Kraftfahrzeug.

In den letzten Jahren haben sich Insassenschutzsysteme, wie Airbags und/oder Gurtstraffer usw., als Standardsicherheitsausrüstung von Kraftfahrzeugen durchgesetzt. Mit zunehmender Verbreitung dieser Systeme sind auch Fälle aufgetreten, bei denen insbesondere das Aufblasen eines Airbags zu Verletzungen geführt hat, weil Informationen über die Art der Sitzbelegung sowie die Position einer auf dem Sitz befindlichen Person und deren charakteristischer Merkmale, wie beispielsweise das Gewicht, fehlten. Der Aufblasvorgang des Airbags wird daher derart ausgelegt, daß eine erwachsene, angeschnallte Person bei einem Unfall nicht bis auf einen harten Gegenstand, beispielsweise das Armaturenbrett oder das Lenkrad durchschlägt. Befindet sich der Kopf der Person zum Zeitpunkt der Auslösung des Airbags zu dicht am Lenkrad oder dem Armaturenbrett (out-off-position), kann diese Auslegung zu Verletzungen führen.

Zur Abhilfe für dieses Problem sind Systeme in Entwicklung, die mit Hilfe unterschiedlichster Verfahren mittlere Entfernungen in einem jeweils untersuchten Volumen messen und den Abstand zwischen dem Lenkrad oder dem Armaturenbrett und einer Person ermitteln, so daß der Airbag bedarfsgerecht ausgelöst und gezündet werden kann. Weiter gibt es Systeme, die mit Hilfe von Gewichtssensoren unterschiedlichster Bauart, wie Sitzmatten, Dehnmeßstreifen usw., die Art der Sitzbelegung, insbesondere das Gewicht einer auf dem Sitz sitzenden Person als Auslösepärameter erfassen. Die Gewichtsmessung ist problematisch, da die verwendeten Sensoren zum Teil sehr aufwendig sind und deren Anbringung am Sitz schwierig ist. Außerdem sind die gewonnen Meßwerte nur schwer interpretierbar.

Aus der DE 19625890A1, von der in den Oberbegriffen der unabhängigen Ansprüche zunächst ausgegangen wird, ist ein Steuerverfahren für eine Sicherheitseinrichtung eines Fahrzeugs bekannt, bei dem mittels einer optischen oder Infrarotkamera eine auf einem Sitz befindliche Person aufgenommen wird, um deren Haltung und Abmessungen zu erfassen. In einem elektronischen Steuergerät ist eine Tabelle gespeichert, die den Körpermaßen das Gewicht der jeweiligen Person zuordnet. Diese Zuordnung ist verhältnismäßig ungenau, da das Gewicht gleich großer Personen erheblich unterschiedlich sein kann.

Ein diese Nachteile wenigstens teilweise vermeiden des Verfahren zum Steuern des Betriebs einer einem Sitz zugeordneten Insassenschutzvorrichtung offenbart z.B. die gattungsgemäße DE 197 57 595.

Der Erfindung liegt die Aufgabe zugrunde, ein gattungsgemäßes Verfahren und eine gattungsgemäße Vorrichtung derart weiterzubilden, daß der Betrieb der Insassenschutzvorrichtung in verbesserter Weise an die jeweiligen Erfordernisse angepaßt werden kann.

Der das Verfahren betreffende Teil der Erfindungsaufgabe wird mit den Merkmalen des Anspruchs 1 gelöst.

Erfindungsgemäß wird danach das Volumen eines auf dem Sitz befindlichen Gegenstandes, insbesondere einer Person, ermittelt, wobei ein Positionsoberflächenbild des unbelegten Sitzes aus einem dreidimensionalen Oberflächenbild des Sitzes und einem Signal erzeugt wird, das von wenigstens einem die Sitzverschiebung und/oder Sitzneigung erfassenden Sensors geliefert wird. Die Erfindung hat zum Vorteil, daß verhältnismäßig genau auf das Gewicht der Person geschlossen werden kann, so daß der Betrieb der Insassenschutzvorrichtung an dieses Gewicht angepaßt werden kann.

Die auf den Anspruch 1 rückbezogenen Unteransprüche bilden das erfindungsgemäße Verfahren in vorteilhafter Weise weiter.

Der auf die Vorrichtung gerichtete Teil der Erfindungsaufgabe wird mit den Merkmalen des Anspruchs 7 gelöst.

Die Merkmale des Anspruchs 8 sind auf eine vorteilhafte Weiterbildung der erfindungsgemäßen Vorrichtung gerichtet.

Die Erfindung ist für jedwelche Arten von Insassenschutzvorrichtungen geeignet, die einem Sitz zugeordnet sind, beispielsweise Sitzen in Flugzeugen, in Booten, in allen Arten von Landfahrzeugen usw. Die Insassenschutzvorrichtung kann eine Gurtstraffeinrichtung, eine Airbageinrichtung oder eine sonstige Einrichtung sein, die eine auf dem Sitz befindliche Person bei einem Unfall vor Verletzungen schützen soll.

Die Erfindung wird im folgenden anhand schematischer Zeichnungen beispielsweise und mit weiteren Einzelheiten erläutert.

Es stellen dar:
Fig. 1 eine schematische Ansicht der erfindungsgemäßen Vorrichtung mit einem Blockschaltbild und
Fig. 2 Skizzen zur Erläuterung der Erfindung.

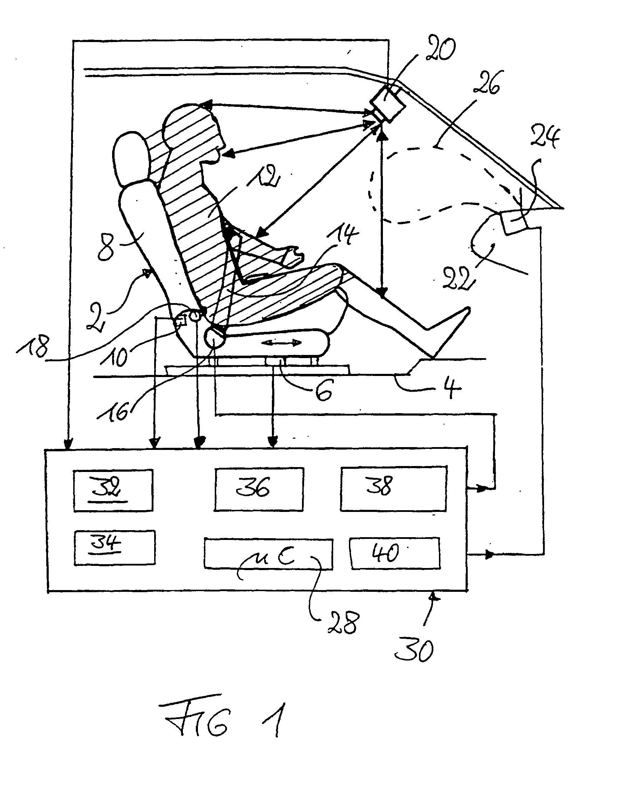

Gemäß Fig. 1 ist ein Sitz 2, im dargestellten Beispiel der Beifahrersitz, an dem Boden 4 des Fahrzeugs längs verschieblich befestigt. Die Position des Sitzgestells ist mittels eines Sensors 6, beispielsweise eines mit einem Elektromotor zur Sitzverschiebung gekoppelten Potentiometers, erfaßbar.

Die Neigung der Sitzlehne 8 ist mittels eines Neigungssensors 10 erfaßbar.

Auf dem Sitz 2 sitzt eine Person 12, die mittels eines Sicherheitsgurtes 14 angeschnallt ist. Zur Spannung des Sicherheitsgurtes 14 ist eine an sich bekannte, beispielsweise elektrisch oder pyroelektrisch arbeitende Gurtspannvorrichtung 16 vorgesehen. Die Sitzbelegung kann mittels eines Belegungssensors 18 erfaßt werden, der als Sensormatte, Einzelsensor oder sonst wie ausgebildet sein kann.

Vor der Person 12 ist am Fahrzeughimmel über der Windschutzscheibe eine in Fig. 1 vergrößert dargestellte 3-D-Kameraeinrichtung zum Erzeugen von dreidimensionalen Positionsoberflächenbilddaten angebracht. Zur Erzeugung der dreidimensionalen Positionsoberflächenbilddaten können unterschiedlichste Entfernungsmeßverfahren angewandt werden, beispielsweise Triangulationen mit Lichtschnitten, wobei die aufzunehmende Szene mit einem geeigneten Muster (z.B. Linien) beleuchtet wird und mit Hilfe einer Kamera, die die Szene unter einem Winkel betrachtet, eine Triangulation durchgeführt wird. Je nach Anzahl der Linien erhält man eine Menge von Punkten mit Entfernungswerten. Andere geeignete Verfahren sind stereoskopische Aufnahmeverfahren, Laserlichtlaufzeitmeßeinrichtungen usw. Bei laufzeitmessenden Verfahren kann beispielsweise die Szene von einer zentralen Lichtquelle aus beleuchtet werden und das auf ein Photodiodenarray fallende, von der Szene reflektierte Licht, wird richtungsselektiv ausgewertet, so daß ein dreidimensionales Oberflächenbild erzeugt wird, das richtungsabhängig die Entfernung der Bildpunkte von dem Photodiodenarray angibt. Unter Positionsoberflächenbilddaten werden Daten verbunden, die die Absolutposition eines Bildoberflächenpunktes relativ zu einem Bezugspunkt, d.h. Richtung und Entfernung, angeben bzw. enthalten.

Vor dem Beifahrersitz ist in einem Armaturenbrett 22 eine in ihrem Aufbau an sich bekannte Airbageinrichtung 24 vorgesehen, deren sich entfaltender Airbag 26 gestrichelt angedeutet ist. Die Airbageinrichtung 24 enthält beispielsweise mehrere Zündpillen- und Gasgeneratoren, die selektiv zündbar sind, so daß die Aufblasgeschwindigkeit und/oder der Druck, bis zu dem sich der Airbag 26 aufbläst, steuerbar sind.

Eingänge eines elektronischen Steuergerätes 30, das einen Mikroprozessor 28 mit zugehörigen Speichereinrichtungen enthält und in seinem Aufbau und in seinen Grundfunktionen an sich bekannt ist, sind mit der 3-D-Kameraeinrichtung 20, dem Neigungssensor 10, dem Sitzbelegungssensor 18, dem Sensor 6 sowie gegebenenfalls weiteren, nicht dargestellten Sensoren, wie Beschleunigungssensoren usw., verbunden. Ausgänge sind mit der Airbageinrichtung 24 und der Gurtspannvorrichtung 16 verbunden.

Das Steuergerät 30 enthält eine Einrichtung 32 zum Speichern von der 3-D-Kameraeinrichtung 20 aufgenommenen, elektronischen Positionsoberflächenbilddaten, einen Speicher 34 zum Speichern von einprogrammierbaren Tabellen, eine Vergleichseinrichtung 36, eine Auswerteeinrichtung 38 zum Erzeugen von Ausgangssignalen und eine Sensorsignalerfassungseinrichtung 40.

Die als Funktionsblöcke dargestellten Einrichtungen innerhalb des Steuergerätes 30 können Hardware- und Softwaremäßig in unterschiedlicher Weise aufgeteilt sein.

Die Funktion des beschriebenen Systems ist folgende:

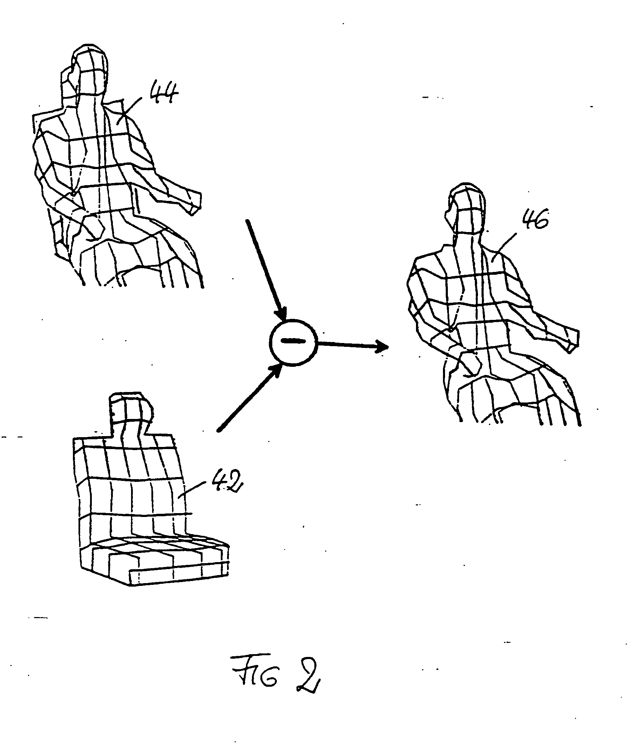

Ein dreidimensionales Positionsoberflächenbild des unbelegten Sitzes 2 kann beispielsweise dadurch erzeugt werden, daß von der 3-D-Kameraeinrichtung 20 ein Bild der nicht belegten Sitzoberfläche aufgenommen wird. Je nach Aufbau der Kameraeinrichtung ist das dreidimensionale Positionsoberflächenbild ein Punktrasterbild 42 gemäß Fig. 2, dessen Punkte in einem beispielsweise auf einen Punkt der Kameraeinrichtung 20 bezogenen Koordinatensystem hinsichtlich ihrer Richtung und ihres Abstandes bekannt sind. Anhand der einzelnen Bildpunkte wird der nicht belegte Fahrzeugsitz mit Gitternetzlinien überzogen, die sich in den Bildpunkten schneiden und die einer interpolierende, näherungweise Erfassung der gesamten Oberfläche des Sitzes erlauben. Damit sichergestellt ist, daß der Sitz zum Zeitpunkt der Aufnahme nicht belegt ist, erfolgt eine Aufnahme nur, wenn der Belegungssensor 18 ein die Nichtbelegung des Sitzes anzeigendes Signal erzeugt. Zusätzlich wird die Position des Sitzes bei der Erzeugung des Positionsoberflächenbildes 42 anhand der Ausgangssignale der Sensoren 6 und 18, die von der Sensorerfassungseinrichtung 40 ausgelesen werden, festgehalten. In dem Bilddatenspeicher 32 steht somit ein dreidimensionales Positionsoberflächenbild zur Verfügung, das die Position jedes Oberflächenpunktes des nicht belegten Sitzes bezüglich eines fahrzeugfesten Koordinatensystems angibt.

Das dreidimensionale Positionsoberflächenbild 42 kann auch dadurch erzeugt werden, daß Daten eines Oberflächenbildes der Sitzlehne und des Sitzkissens im Datenspeicher 34 abgelegt werden, die Relativpositionen der Oberflächenpunkte zueinander enthalten und auf Bezugswerte des Ausgangssignals des Neigungssensors 10 und des Verschiebungssensors 6 bezogen sind. Für jeweilige Werte der Ausgangssignale des Verschiebungssensors 6 und des Neigungssensors 10 können Daten erzeugt werden, die einem dreidimensionalen Positionsoberflächenbild 42 des Sitzes 2 entsprechen, die dann aus den vorgespeicherten Oberflächenbilddaten und den Ausgangssignalen der Sensoren 6 und 10 errechnet und im Speicher 32 abgelegt werden.

Mit der 3D-Kameraeinrichtung 20 wird ein dreidimensionales Positionsoberflächenbild des mit der Person 12 belegten Sitzes aufgenommen, das in Fig. 2 mit 44 bezeichnet ist. Dieses Bild wird vorteilhafterweise in kurzen Zeitabständen aufgenommen, so daß es ständig verfügbar ist. Das Positionsoberflächenbild kann im Falle eines sich ankündigenden Unfalls, beispielsweise bei einer über einem vorbestimmten Wert liegenden Fahrzeugverzögerung mit einem gegebenenfalls veränderten Auswertealgorithmus, der rascher oder genauer arbeitet, erzeugt werden.

Durch Subtraktion der dreidimensionalen Positionsoberflächenbilddaten des Bildes 42 von den Daten des Bildes 44 in der Vergleichseinrichtung 36 läßt sich das dreidimensionale Oberflächenbild 46 erzeugen, aus dem das Volumen der auf dem Sitz sitzenden Person (in Fig. 1 gestrichelt) errechenbar ist.

Es versteht sich, daß beim Subtrahieren des Bildes 42 vom Bild 44 überprüft wird, ob sich der Sitz bei der Aufnahme des Bildes 44 in der gleichen Position wie bei Aufnahmen des Bilds 42 befindet. Ist dies nicht der Fall, so wird anhand der Ausgangssignale der Sensoren 6 und 10 das Positionsoberflächenbild des unbelegten Sitzes in das Positionsoberflächenbild umgerechnet, das dem Sitz in der belegten Position entspricht, in der das Bild 44 aufgenommen ist.

Um Oberflächenveränderungen des unbelegten Sitzes zu berücksichtigen, wie sie bei Belegung des Sitzes mit der Person 12 auftreten, können in der Vergleichseinrichtung 36 entsprechende Korrekturalgorithmen abgelegt sein.

Aus den Oberflächenbilddaten 46 kann das Volumen und daraus anhand vorbestimmter Tabellen das Gewicht der Person berechnet werden, so daß in der Auswerteeinrichtung 38 Signale errechnet werden können, die die Airbageinrichtung 24 und/oder die Gurtspannvorrichtung 16 entsprechend der Position und/oder dem Gewicht der Person 12 auslösen und steuern.

In dem Datenspeicher 34 können des weiteren Bildmuster abgelegt sein, die beispielsweise einen Kindertragkorb, einen Kindersitz, einem Kind, einer mittelgroßen Person, einer dikken Person, einer dünnen Person usw. entsprechen und anhand derer das Oberflächenbild 46 kategorisiert werden kann, so daß die Sicherheitseinrichtungen entsprechend der jeweils ermittelten Kategorie ausgelöst oder erforderlichenfalls nicht ausgelöst wird. Es versteht sich, daß auch die Volumina bei festgestellten Personen in unterschiedliche Klassen eingeteilt sein können, so daß die Sicherheitseinrichtungen den jeweiligen Volumen- bzw. Gewichtsklassen entsprechend eingeteilt werden können. Eine Feinkategorisierung, beispielsweise kleine Person mit großem Volumen oder große Person mit kleinem Volumen läßt unterschiedliche Zuordnungen zwischen Volumen und Gewicht möglich werden, so daß die Auslösung verhältnismäßig genau auf die jeweilige Person abgestimmt werden kann.

Die Anordnung kann in unterschiedlichster Weise abgeändert werden. Beispielsweise können im Bereich des Fahrzeughimmels mehrere 3-D-Kameraeinrichtungen angeordnet werden, mit denen die Positionsoberflächenbilder aus unterschiedlicher Perspektive aufgenommen werden können, so daß eine genauere Volumenbestimmung möglich ist.

Mit der Erfindung ist es möglich, sowohl den Abstand aufschlag-gefährdeter Teile, beispielsweise des Kopfes, von harten Gegenständen, als auch die Volumina und damit die Gewichte der zu schützenden Personen genau festzustellen, so daß ein wirksamer Insassenschutz möglich ist.

## Patentansprüche

1. Verfahren zum Steuern des Betriebs einer einem Sitz (2) zugeordneten Insassenschutzvorrichtung (16; 24), insbesondere in einem Kraftfahrzeug,
bei dem die Position und geometrische Abmessungen eines auf dem Sitz (2) befindlichen Objektes (12), insbesondere einer Person (12), ermittelt werden und der Betrieb einer dem Sitz (2) zugeordneten Insassenschutzvorrichtung (16; 24) abhängig von der Position und den geometrischen Abmessungen des Gegenstandes (12) gesteuert werden,
wobei ein Volumen (46) des auf dem Sitz befindlichen Objektes (12) ermittelt wird und der Betrieb der Insassenschutzvorrichtjung (16; 24) abhängig von dem Volumen (46) gesteuert wird;
**dadurch gekennzeichnet, dass** ein Positionsoberflächenbild (42) des unbelegten Sitzes (2) aus einem dreidimensionalen Oberflächenbild des Sitzes (2) und einem Signal erzeugt wird, das von wenigstens einem die Sitzverschiebung und/oder Sitzneigung erfassenden Sensors (6, 10) geliefert wird.

2. Verfahren nach Anspruch 1, bei dem der Betrieb der Insassenschutzvorrichtung stufenweise verändert wird und die Stufen wenigstens von dem ermittelten Volumen abhängen.

3. Verfahren nach Anspruch 1 oder 2, bei dem die Gestalt des Volumens des auf dem Sitz (2) befindlichen Objektes (12) ermittelt wird und die Insassenschutzvorrichtung abhängig von der Gestalt gesteuert wird.

4. Verfahren nach einem der Ansprüche 1 bis 3, enthaltend folgende Schritte
- Erzeugen eines dreidimensionalen Positionsoberflächenbildes (42) der Sitz- und Lehnfläche des unbelegten Sitzes,
- Erzeugen eines dreidimensionalen Positionsoberflächenbildes (44) eines auf dem Sitz befindlichen Objektes,
- Ermitteln des Volumens (46) des auf dem Sitz befindlichen Objektes durch Vergleichen der Positionsoberflächenbilder (44; 42) miteinander.

5. Verfahren nach Anspruch 4, bei dem das dreidimensionale Positionsoberflächenbild (42) des unbelegten Sitzes (2) mittels eines bildgebenden Verfahrens erzeugt wird.

6. Verfahren nach einem der Ansprüche 4 oder 5, bei dem die Nichtbelegung des Sitzes (2) mittels eines Sitzbelegungssensors (18) erfasst wird.

7. Vorrichtung zum Steuern des Betriebs einer einem Sitz (2) zugeordneten Insassenschutzvorrichtung (16; 24), insbesondere in einem Kraftfahrzeug, enthaltend
- eine Einrichtung (20, 32) zum Erzeugen von Positionsbilddaten eines auf dem Sitz befindlichen Objektes (12), wobei die Einrichtung zum Erzeugen von Bilddaten eine Einrichtung (20, 32) zum Erzeugen von elektronischen, dreidimensionalen Positionsoberflächenbilddaten (42, 44) des unbelegten und des belegten Sitzes (2) ist;
- eine Einrichtung (36) zum Vergleichen der Daten der dreidimensionalen Positionsoberflächenbilder (42, 44) des belegten und des unbelegten Sitzes, wodurch Bilddaten eines Oberflächenbildes (46) des auf dem Sitz befindlichen Objektes ermittelbar sind, aus dem das Volumen des Gegenstandes herleitbar ist; und
- eine Einrichtung (38) zum Ansteuern der Insassenschutzvorrichtung (16; 24) in Abhängigkeit von der Position und geometrischen Abmessungen des auf dem Sitz befindlichen Objektes, wobei die Einrichtung (38) zum Ansteuern der Insassenschutzvorrichtung (16; 24) die Insassenschutzvorrichtung in Abhängigkeit von dem Volumen des auf dem Sitz befindlichen Objektes ansteuert;
**dadurch gekennzeichnet, dass**
die Positionsoberflächenbilddaten (42) des unbelegten Sitzes (2) aus dreidimensionalen Oberflächenbilddaten des Sitzes (2) und einem Signal erzeugbar sind, das von wenigstens einem die Sitzverschiebung und/oder Sitzneigung erfassenden Sensors (6, 10) geliefert wird.

8. Vorrichtung nach Anspruch 7, **gekennzeichnet durch** eine Einrichtung (34, 38) zum Erfassen der Gestalt des auf dem Sitz befindlichen Objektes anhand der Daten des dreidimensionalen Oberflächenbildes (46) zum Kategorisieren der erfassten Gestalt entsprechend vorbestimmten Kategorien und zum Erzeugen eines Kategoriesignals, dass der Einrichtung (38) zum Ansteuern der Insassenschutzvorrichtung (16; 24) zugeführt wird.

## Claims

1. Method for controlling the operation of an occupant protection device (16; 24) assigned to a seat (2), in particular in a motor vehicle,
by means of which the position and the geometrical dimensions of an object (12), in particular a person (12) sitting on the seat (2) are determined and the operation of an occupant protection device (16; 24) assigned to the seat (2) is controlled depending on the position and the geometrical dimensions of the object (12),
in which case a volume (46) of the object (12) located on the seat is determined and the operation of the occupant protection device (16; 24) is controlled depending on the volume (46);
**characterized in that** a position surface image (42) of the unoccupied seat (2) is generated from a three-dimensional surface image of the seat (2) and a signal which is supplied by at least one sensor (6, 10) detecting the seat adjustment and/or seat tilt.

2. Method according to Claim 1, by means of which the operation of the occupant protection device can be changed gradually and the steps depend on at least the determined volume.

3. Method according to Claim 1 or 2, by means of which the shape of the volume of the object (12) located on the seat (2) is determined and the occupant protection device is controlled depending on the shape.

4. Method according to one of the Claims 1 to 3, containing the following steps
- Creating a three-dimensional position surface image (42) of the seat and backrest area of the unoccupied seat,
- Creating a three-dimensional position surface image (44) of an object located on the seat,
- Determining the volume (46) of the object located on the seat by comparing the position surface images (44; 42) with one another.

5. Method according to Claim 4, by means of which the three-dimensional position surface image (42) of the unoccupied seat (2) is created by means of a method that provides an image.

6. Method according to one of the Claims 4 or 5, by means of which the unoccupied seat (2) is detected by means of a seat assignment sensor (18).

7. Device for controlling the operation of an occupant protection device (16; 24) assigned to a seat (2), in particular in a motor vehicle, containing the following
- a device (20, 32) for creating position image data of an object (12) located on a seat, in which case the device for creating image data is a device (20, 32) for creating electronic and three-dimensional position surface image data (42, 44) of the unoccupied and occupied seat (2);
- a device (36) for comparing the data of the three-dimensional position surface images (42, 44) of the occupied and unoccupied seat by means of which image data of a surface image (46) of the object located on the seat can be determined and from which the volume of the object can be derived; and
- a device (38) for activating the occupant protection device (16; 24) as a function of the position and geometrical dimensions of the object located on the seat, in which case the device (38) for activating the occupant protection device (16; 24) activates the occupant protection device as a function of the volume of the object located on the seat;
**characterized in that** the position surface image data (42) of the unoccupied seat (2) can be created from three-dimensional surface image data of the seat (2) and from a signal that is supplied from at least one sensor (6, 10) detecting a seat adjustment and/or seat tilt.

8. Device according to Claim 7, **characterized by** a device (34, 38) for detecting a shape of the object located on the seat on the basis of the data of the three-dimensional surface image (46) for categorizing the shape detected according to pre-defined categories and for creating a category signal that is supplied to the device (38) for activating the occupant protection device (16; 24).

## Revendications

1. Procédé de commande du fonctionnement d'un dispositif de protection (16; 24) de l'occupant d'un siège, dispositif associé à un siège (2), en particulier dans un véhicule automobile,
- dans lequel on détermine la position et les dimensions géométriques d'un objet (12) se trouvant sur le siège (2), en particulier celles d'une personne (12), et on commande, en fonction de la position et des dimensions géométriques de l'objet (12), le fonctionnement d'un dispositif (16; 24) de protection de l'occupant d'un siège, associé au siège (2),
- dans lequel on détermine un volume (46) de l'objet (12) se trouvant sur le siège (2) et on commande le fonctionnement du dispositif de protection (16; 24) de l'occupant du siège en fonction du volume (46),
- **caractérisé en ce qu'**une image (42) de position de la surface extérieure du siège inoccupé est réalisée à partir d'une image tridimensionnelle de la surface extérieure du siège (2) et d'un signal qui est fourni par au moins un détecteur (6, 10) relevant la translation du siège et/ou l'inclinaison du siège.

2. Procédé suivant la revendication 1, dans lequel le fonctionnement du dispositif de protection de l'occupant du siège est modifié par étapes, et les étapes dépendent au moins du volume qui a été déterminé.

3. Procédé suivant la revendication 1 ou 2, dans lequel on détermine la configuration du volume de l'objet (12) se trouvant sur le siège (2) et on commande le dispositif de protection de l'occupant du siège en fonction de cette configuration.

4. Procédé suivant l'une des revendications 1 à 3, comportant les étapes suivantes:
- réalisation d'une image tridimensionnelle (42) de position de la surface extérieure de l'assise et du dossier du siège non occupé,
- réalisation d'une image tridimensionnelle (44) de position de la surface extérieure d'un objet se trouvant sur le siège,
- détermination du volume (46) de l'objet se trouvant sur le siège, en comparant entre elles les images (44; 42) de position des surfaces extérieures.

5. Procédé suivant la revendication 4, dans lequel l'image tridimensionnelle (42) de position de la surface extérieure du siège non occupé est réalisée au moyen d'un procédé photographique.

6. Procédé suivant l'une des revendications 4 ou 5, dans lequel la non-occupation du siège (2) est déterminée au moyen d'un détecteur d'occupation du siège (18).

7. Dispositif de commande du fonctionnement d'un dispositif de protection (16; 24) de l'occupant d'un siège, dispositif associé à un siège (2), en particulier dans un véhicule automobile, comportant:
- un dispositif (20, 32) pour produire des données d'image de positionnement d'un objet (12) se trouvant sur le siège, le dispositif de production de données d'image étant un dispositif (20, 32) pour produire des données électroniques tridimensionnelles de position des surfaces extérieures du siège (2) non-occupé et du siège (2) occupé;
- un dispositif (36) pour comparer les données des images tridimensionnelles (42, 44) de position de la surface extérieure du siège non-occupé et du siège occupé, en pouvant obtenir des données d'image d'une image de la surface extérieure (46) de l'objet se trouvant sur le siège, image à partir de laquelle on peut déduire le volume de l'objet; et
- un dispositif (38) pour déclencher le dispositif de protection (16; 24) de l'occupant d'un siège, en fonction de la position et de dimensions géométriques de l'objet se trouvant sur le siège, le dispositif (38) de déclenchement du dispositif de protection (16; 24) de l'occupant d'un siège déclenchant le dispositif de protection de l'occupant d'un siège en fonction du volume de l'objet se trouvant sur le siège;
- **caractérisé en ce que**
- les données (42) de position de la surface supérieure du siège (2) non-occupé peuvent être réalisées à partir de données tridimensionnelles d'image de la surface extérieure du siège (2) et à partir d'un signal, qui est fourni par au moins un détecteur (6, 10) relevant la translation du siège et/ou l'inclinaison du siège.

8. Dispositif suivant la revendication 7, **caractérisé par** un dispositif (34, 38) pour relever la configuration de l'objet se trouvant sur le siège à l'aide des données de l'image tridimensionnelle (46) des surfaces extérieures pour classer par catégories la configuration relevée en fonction de catégories prédéfinies, et pour produire un signal de catégorie, qui est envoyé au dispositif (38) pour déclencher le dispositif de protection (16; 24) de l'occupant du siège.
